Europäisches Patentamt

European Patent Office

Office européen des brevets

(19)

(11) EP 0 783 916 A1

(12) **EUROPÄISCHE PATENTANMELDUNG**

(43) Veröffentlichungstag:
16.07.1997 Patentblatt 1997/29

(51) Int Cl.⁶: **B01D 53/56**, B01D 53/86

(21) Anmeldenummer: 97100351.2

(22) Anmeldetag: 10.01.1997

(84) Benannte Vertragsstaaten:
AT BE CH DE DK ES FR GB GR IE IT LI NL PT SE

(30) Priorität: 12.01.1996 DE 19600869

(71) Anmelder: METALLGESELLSCHAFT AG
60323 Frankfurt am Main (DE)

(72) Erfinder:
• Diestelkemper, Josef
61206 Wöllstadt (DE)
• Stegemann, Bertold
65760 Eschborn (DE)
• Eschenburg, Jochim
61381 Friedrichsdorf (DE)

(54) **Verfahren zur Entstickung von Rauchgasen**

(57) Bei einem Verfahren zur Entstickung von bei der thermischen Abfallverwertung anfallender Rauchgase wird in den Nachreaktionsraum der Verbrennungsanlage wäßrige Ammoniaklösung eingebracht. Zur Vermeidung von Ammoniakschlupf werden die gereinigten Rauchgase mittels eines Festkatalysators entstickt.

EP 0 783 916 A1

## Beschreibung

Die Erfindung betrifft ein Verfahren zur Entstickung von bei der thermischen Abfallverwertung anfallender Rauchgase, bei dem in den Strahlungsraum oder Nachreaktionsraum der Verbrennungsanlage bei Temperaturen von 850 bis 1000°C über ein Düsensystem als Reduktionsmittel wäßrige Ammoniak- oder Harnstofflösung eingebracht und die austretenden, ggf. einer Entstaubung unterworfenen Rauchgase, nach der Reinigung dem Kamin zugeführt werden.

Abfall, hier auch verwendet als Sammelbegriff für Restmüll, Sondermüll und Gemische derselben, ist eine inhomogene Mischung aus organischen und anorganischen Bestandteilen. Die konkrete Zusammensetzung ergibt sich aus den lokal angewendeten Sammel- und Sortierungsvorschrift sowie der nichtthermischen Vorbehandlung. Nicht wiedergewinnbare Bestandteile des Abfalls werden als heizwertreiches Brennstoffgemisch z.B. Rost- oder Drehrohr-Verbrennungsanlagen zugeführt und unter Sauerstoffeinfluß bei Temperaturen von typischerweise 900 bis 1200°C verbrannt. Die Wärmerückgewinnung erfolgt im allgemeinen über nachgeschaltete, dampfbetriebene Abhitzekessel.

In der Verbrennungszone bilden sich infolge der dort herrschenden hohen Temperaturen erhebliche Mengen Stickoxide, die aus den Abgasen entfernt werden müssen, da sie als Umweltgifte relevant sind. Grenzwerte für Stickoxide sind in nationalen Verordnungen über Verbrennungsanlagen für Abfälle und ähnliche brennbare Stoffe, z.B. in der deutschen Bundes-Immissionschutzverordnung, der schweizerischen Luftreinhalte Verordnung 1992 und der niederländischen "Richtlijn Verbranden 1989" festgelegt.

Zur Minderung der Stickoxid-Emissionen aus Abfall-Verbrennungsanlagen ist in der Firmenschrift der Lurgi Energie und Umwelt GmbH, Frankfurt am Main, September 1992 ein Verfahren zur Entstickung von bei der thermischen Abfallverwertung in einem Verbrennungskessel mit Rostfeuerung und Abhitzekessel anfallenden Rauchgasen beschrieben, bei dem in den Feuerraum des Verbrennungskessels bei Temperaturen zwischen 850 bis 1000°C wäßrige Ammoniak- oder Harnstofflösung als Reduktionsmittel eingedüst wird. Durch Zugabe des wäßrigen Reduktionsmittels können je nach Stöchiometrie Abscheidegrade zwischen 50 % und über 90% erreicht werden. Zum Erreichen hoher Abscheidegrade von mehr als 80 % ist dafür eine Zugabe-Stöchiometrie von über 2 erforderlich. Überschüssiges Ammoniak gelangt überwiegend als Ammoniakschlupf in die nachgeschaltete, zum Erreichen der gesetzlichen Emissionswerte zwingend erforderlichen Rauchgasreinigungsanlage. Bei naß betriebener Rauchgasreinigungsanlage wird der Ammoniakschlupf im Rauchgas in der sauer betriebenen Wäscherstufe ausgewaschen und gelangt somit in das Abwasser, aus dem der Ammoniak in einer alkalisch betriebenen Rektifizierkolonne abgetrennt werden muß. Wird die Rauchgasreinigungsanlage trocken betrieben, so führt der Überschuß an Ammoniak zu Geruchsbelästigungen.

In der vorstehend angeführten Firmenschrift ist ferner ein Verfahren zur Entstickung von bei der thermischen Abfallverwertung in einem Verbrennungskessel mit Rostfeuerung anfallender Rauchgase vorgesehen, bei dem den entstaubten und gereinigten Rauchgasen mit Luft vorgemischtes Ammoniak in etwas stöchiometrischer Menge, bezogen auf die abzuscheidenden Stickoxide, zudosiert und das so vorbehandelte Rauchgas anschließend über einen in mehreren Ebenen angeordneten Katalysator geleitet wird. Der Katalysator besteht im allgemeinen aus Titandioxid als Hauptkomponente sowie Oxiden von Vanadium, Wolfram und ggf. anderen Metallen und arbeitet bei Betriebstemperaturen im Bereich von 250 bis 400°C, vorzugsweise 320 bis 380°C. Die eigentliche Entstickungsvorrichtung besteht aus einem Gas-Gas-Wärmeaustauscher, einer Heizanlage und dem den Katalysator enthaltenen Reaktor. Der Wärmeaustauscher nutzt die heißen Rauchgase, die den Reaktor verlassen, zur Vorwärmung der ankommenden Rauchgase auf die erforderliche Temperatur des Katalysators durch eine Gas-, Öl- oder Dampfheizung. Die Dosierung des Ammoniaks wird durch die vor und hinter dem Reaktor erfaßten Stickoxid-Meßwerte gesteuert. Die Anlage zur Durchführung dieses Verfahrens bedarf eines vergleichsweise großen Platzbedarfs und ist mit einem relativ hohem Betriebs- und Wartungsaufwand verbunden.

Es ist die Aufgabe der vorliegenden Erfindung, daß eingangs beschriebene Verfahren zur Entstickung vom bei der thermischen Abfallverwertung anfallender Rauchgase so auszugestalten, daß selbst bei hohen Abscheidungsgraden der Ammoniakschlupf in den Rauchgasen nicht mehr als 5 mg/Nm$^3$ beträgt und der dafür erforderliche Aufwand für Zusatzausrüstungen relativ niedrig ist.

Die Lösung dieser Aufgabe erfolgte durch die im Anspruch 1 angegebenen Maßnahmen.

Ausgestaltungen dieser Verfahrensmaßnahmen sind in den Ansprüchen 2 bis 3 wiedergegeben.

Es hat sich gezeigt, daß die aus der ersten, nichtkatalytischen Verfahrensstufe austretenden, eine Ammoniak-Konzentration von 50 bis 500 mg/Nm$^3$ enthaltenden Rauchgase, in der nachgestalteten zweiten, katalytischen Verfahrensstufe, ggf. unter weiterer Zugabe von Ammoniak in einem vergleichsweise niedrigen Temperaturbereich soweit entfernt werden können, daß im Rauchgas nur eine Restkonzentration von <5mg/Nm$^3$ verbleibt, so daß sowohl eventuell entstehende Emissionsgrenzwerte bereits an dieser Stelle unterschritten als auch Geruchsbelästigungen aus Abscheideprodukten der nachgeschalteten Rauchgasreinigungsanlage vermieden werden.

Die DE-C-4313479 befaßt sich ebenfalls mit einem zweistufigen Verfahren zur Entstickung von bei der Herstellung von Zement im Drehrohrofen anfallenden Abgasen. Dabei wird den Abgasen nach dem Austritt aus dem Drehrohrofen bei einer Temperatur von 750 bis 950°C Ammoniak mit einem Verhältnis von $NO_x : NH_3$ = 1 : 0,8 bis 1 : 1 zugegeben. Das Abgas wird dann mit einer Temperatur von 300 bis 400°C mit einem Katalysator in Kontakt gebracht, der als aktive Substanz eine Schüttung aus Eisensulfat oder eine Schüttung einer Mischung aus Eisensulfat und Mangansulfat aufweist. Das Verfahren arbeitet mit einem Entstickungsgrad von 75 bis 95 %. Ein Ammoniakschlupf wird vermieden, weil bei der nichtkatalytischen Hochtemperaturentstickung innerhalb des angegebenen Temperaturbereichs praktisch keine Verbrennung des Ammoniaks mit dem im Abgas enthaltenden Sauerstoffs erfolgt, so daß das nicht zur Hochtemperaturentstickung genutzte Ammoniak noch für die katalytische Abgasentstickung zur Verfügung steht, die eine hohe Entstickungsleistung von 90 bis 95 % zuläßt.

Nachteilig ist bei diesem Verfahren, daß durch die Katalysatorschüttung ein unerwünschter Druckverlust entsteht. Darüber hinaus ist die Reinigung der Katalysatorschüttung mit einem erheblichen Aufwand verbunden.

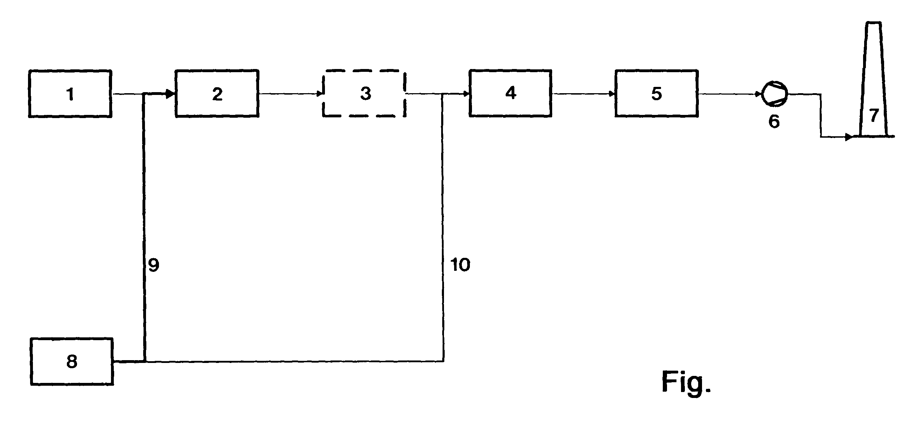

Das erfindungsgemäße Verfahren ist in der Zeichnung anhand eines Stoffstromdiagramms beispielhaft dargestellt und wird nachfolgend näher erläutert.

In den eine Temperatur von 800 bis 1000°C aufweisenden Nachreaktionsraum (1) mit anschließenden Abhitzekessel eines Müllverbrennungskessels (2) mit Feuerungsrost wird über ein nichtdargestelltes Düsensystem wäßrige in dem Vorratsbehälter (3) befindliche Ammoniaklösung über die Leitung (4) in überstöchiometrischer Dosierung eingebracht. Die selektive nichtkatalytische Reaktion mit den Stickoxiden erfolgt nach der Reaktionsgleichung $4\,NO + 4\,NH_3 + O_2 \rightarrow 4\,N_2 + 6\,H_2O$.

Bei Eindüsung von Harnstoff ergibt sich folgende Reaktionsgleichung

$$CO\,(NH_2)_2 + 2\,NO + \tfrac{1}{2}\,O_2 \rightarrow 2\,N_2 + CO_2 + 2\,H_2O.$$

Das den Abhitzekessel der Müllverbrennungsanlage (2) verlassende Rauchgas wird mittels eines Filters (5) entstaubt und anschließend einem einen Entstickungskatalysator enthaltenden Reaktor (6) aufgegeben, in dem die Stickoxide nach den Reaktionsgleichungen

$$4\,NO + 4\,NH_3 + O_2 \rightarrow 4\,N_2 + 6\,H_2O$$

$$4\,NO_2 + 8\,NH_3 + 2\,O_2 \rightarrow 6\,N_2 + 12\,H_2O$$

reduziert werden. Daneben führen folgende Reaktionen zur partiellen Verbrennung von Ammoniak

$$4\,NH_3 + 3\,O_2 \rightarrow 2\,N_2 + 6\,H_2O$$

$$4\,NH_3 + 5\,O_2 \rightarrow 4\,NO + 6\,H_2O.$$

In einer nachfolgenden Rauchgasreinigung (7) werden die Rauchgase gereinigt und gelangen dann über das Gebläse (8) zum Kamin (9).

Zusätzlich besteht die Möglichkeit einen Anteil wäßriger Ammoniaklösung über die Leitung (10) dem Reaktor (6) aufzugeben.

Die Erfindung wird durch Ausführungsbeispiele näher erläutert:

In dem Feuerraum eines Müllverbrennungskessels wird Kommunalmüll bei einer Temperatur von 1.050°C unter Bildung eines Rauchgasvolumens von 100.000 $Nm^3$/h verbrannt. In dem Nachreaktionsraum des Müllverbrennungskessels werden in die Rauchgase 30 kg/ h wäßrige 25 %-ige Ammoniaklösung eingesprüht, so daß die Temperatur der Rauchgase auf 650°C gesenkt wird. Nach Durchströmen des nachfolgenden Abhitzekessels der Müllverbrennungsanlage beträgt die Temperatur der Rauchgase nur noch 220°C. Die aus dem Abhitzekessel austretenden Rauchgase werden dann in einem Gewebefilter entstaubt, danach mittels eines Wabenkatalysators entstickt und dann in einem Sprühabsorber gereinigt. Das aus dem Sprühabsorber austretende Rauchgasvolumen von 105.000 $Nm^3$/h besitzt eine Temperatur von 130°C und wird über ein Gebläse dem Kamin zugeführt.

## Patentansprüche

1. Verfahren zur Entstickung von bei der thermischen Abfallverwertung anfallender Rauchgase, bei dem in den Strahlungsraum oder Nachreaktionsraum (1) der Verbrennungsanlage (2) bei Temperaturen von 850 bis 1000°C über ein Düsensystem als Reduktionsmittel wäßrige Ammoniak- oder Harnstofflösung eingebracht und die austretenden, ggf. einer Entstaubung (5) unterworfenen Rauchgase, nach der Reinigung (7) dem Kamin (9) zugeführt werden, dadurch gekennzeichnet, daß die Rauchgase vor dem Eintritt in die Rauchgasreinigung (7) über einen zur Entstickung geeigneten, mit einer Betriebstemperatur von 200 bis 400°C arbeitenden Festkatalysator (6) geleitet werden.

2. Verfahren nach Anspruch 1, dadurch gekennzeichnet, daß die Betriebstemperatur des Festkatalysators (6) 250 bis 380°C beträgt.

3. Verfahren nach einem der Ansprüche 1 und 2, dadurch gekennzeichnet, daß mehr als 50% der wäßrigen Ammoniak- oder Harnstofflösung dem Strahlungsraum oder Nachreaktionsraum (1) der Verbrennungsanlage (2) und der Rest dem Festkatalysator (6) zugeleitet werden.

Fig.

**Europäisches Patentamt**

## EUROPÄISCHER RECHERCHENBERICHT

Nummer der Anmeldung

EP 97 10 0351

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | US 5 510 092 A (APPLIED UTILITY SYSTEMS INC.) 23.April 1996 <br> * das ganze Dokument * <br> --- | 1-3 | B01D53/56 <br> B01D53/86 |
| X | GB 2 008 967 A (MITSUBISHI HEAVY IND LTD) 13.Juni 1979 <br> * Ansprüche 1-4; Abbildung 1 * <br> --- | 1-3 | |
| X | US 5 233 934 A (KRIGMONT HENRY V ET AL) 10.August 1993 <br> * Ansprüche 1-27; Abbildung 1 * <br> --- | 1-3 | |
| X | US 5 465 690 A (VIEL LAMARE CHARLES ET AL) 14.November 1995 <br> * Ansprüche 1-23; Abbildung 1 * <br> --- | 1-3 | |
| X | US 4 978 514 A (HOFMANN JOHN E ET AL) 18.Dezember 1990 <br> * Ansprüche 1-19 * <br> --- | 1-3 | |
| A | WO 91 07219 A (ABB CARBON AB) 30.Mai 1991 <br> * Ansprüche 1-4; Abbildung 1 * <br> ----- | 1-3 | **RECHERCHIERTE SACHGEBIETE (Int.Cl.6)** <br><br> B01D |

Der vorliegende Recherchenbericht wurde für alle Patentansprüche erstellt

| Recherchenort | Abschlußdatum der Recherche | Prüfer |
|---|---|---|
| DEN HAAG | 8.April 1997 | Eijkenboom, A |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes Dokument